# EUROPÄISCHE PATENTSCHRIFT

(11) **EP 2 571 597 B1**
(45) Veröffentlichungstag und Bekanntmachung des Hinweises auf die Patenterteilung: **12.12.2018**
(21) Anmeldenummer: 11723180.3
(22) Anmeldetag: 18.05.2011
(51) Int. Cl.: B01D 46/00

(54) **KÜHLLUFTREINIGER EINES ELEKTRONIKGERÄTS**
COOLING AIR PURIFIER FOR AN ELECTRONIC INSTRUMENT
PURIFICATEUR D'AIR FROID D'UN APPAREIL ÉLECTRONIQUE

(30) Priorität: 21.05.2010 DE 202010007120 U
(43) Veröffentlichungstag der Anmeldung: 27.03.2013
(73) Patentinhaber: Novomatic AG, 2352 Gumpoldskirchen (AT)
(72) Erfinder: WINKLER, Heinz, A-2352 Gumpoldskirchen (AT)
(74) Vertreter: Thoma, Michael
(86) Internationale Anmeldenummer: PCT/EP2011/002481
(87) Internationale Veröffentlichungsnummer: WO 2011/144334

(56) Entgegenhaltungen:
- EP-A1- 0 634 299
- EP-A1- 2 327 466
- WO-A1-97/05942
- WO-A1-2007/028176
- DE-A1- 10 131 384
- JP-A- 7 265 633

## Beschreibung

Die vorliegende Erfindung betrifft ein Filtermodul zum Entfernen von Verschmutzungen aus einem Luftstrom, sowie einen Luftreiniger mit einem solchen Filtermodul, welches Filtermodul zumindest eine durchströmbare Filterschicht zum Anlagern der Verschmutzungen an der Filterschicht umfasst, wobei die Filterschicht durch eine Vielzahl von länglichen Filterelementen gebildet ist, die voneinander beabstandet in der Ebene der Filterschicht angeordnet sind, so dass zwischen den Filterelementen Luftdurchtrittsspalte verbleiben, deren Spaltmaß durch den Abstand zwischen benachbarten Filterelementen bestimmt ist.

In der WO 2007/028176 A1 ist ein Luftreiniger zur Reinigung von Maschinenabluft beschrieben, welcher Luftreiniger ein Filtermodul zum Abscheiden von luftfremden Inhaltsstoffen aufweist. Das genannte Filtermodul umfasst hierbei mehrere hintereinander im zu reinigenden Luftstrom angeordnete Filterschichten, die jeweils aus einer Mehrzahl von parallel zueinander angeordneten, voneinander beabstandeten Filterstäben bestehen, wobei die genannten Filterstäbe in hintereinander liegenden Filterschichten zueinander quer zur Strömungsrichtung versetzt sind, so dass der Luftstrom einen serpentinenförmigen Weg durch das Filtermodul hindurch nehmen kann. Die genannten Filterstäbe bestehen hierbei aus einem porösen Material wie beispielsweise Kunststoffschaum, das durch ein Fluid wie Silikonöl befeuchtet ist, so dass luftfremde beziehungsweise unerwünschte Inhaltsstoffe sehr effektiv aus dem Luftstrom abgeschieden werden können.

Bei derartigen Luftreinigern kommt es jedoch im Laufe des Betriebs in einem Gerät dazu, dass sich das Filtermodul zusetzt, was bei Betrieb des Geräts in stark verschmutzter Luft recht schnell beziehungsweise in vergleichsweise kurzer Zeit gehen kann. An den luftdurchlässigen Filterschichten setzen sich nicht nur Mikropartikel ab, sondern auch größere Verunreinigungen wie Staubflusen oder sogar Insekten und Blätter, die nicht durch die schmalen Zwischenräume zwischen den Filterstäben hindurch passen, insbesondere nicht auf dem serpentinenförmig vorgegebenen Weg bei versetzter Filterstabanordnung. Zudem agglomerieren auch die ab- und/oder adsorbierten Mikropartikel mit der Zeit zu größeren Filterkuchenstücken, die das Filtermodul beziehungsweise dessen Filterschicht zusetzen. Mit zunehmender Schichtdicke des Filterkuchens ergibt sich zwar der Effekt der verbesserten Abscheidung/Anlagerung gleichzeitig jedoch auch der negative Effekt eines steigenden Strömungswiderstandes der der zusetzenden Filterschicht. Letzteres führt zu einem zunehmenden Leistungsbedarf zur Durchströmung des Filters beziehungsweise - bei begrenzter Leistung eines verwendeten Luftstromerzeugungsantriebes - zu einer stetigen Abnahme des Volumenstroms durch den Filter hindurch.

Aus der DE 10131384 A1 ist ein Kraftfahrzeug-Luftfilter bekannt, dessen Filterelement in einem Luftfiltergehäuse aufgenommen ist, wobei zwischen dem Boden des Luftfiltergehäuses und dem Filterelement ein Spalt verbleibt, um in das Filtergehäuse eindringendes Regenwasser am Filterelement vorbei ablaufen zu lassen. Die JP 7-265633 beschreibt einen Filter mit einer zickzackförmig gefalteten Filtermembran, zu deren beiden Seiten Bypasskanäle vorgesehen sind, die im bestimmungsgemäßen Betrieb von Ventilen verschlossen sind, welche erst bei übergroßem Staudruck infolge von Filterverstopfung öffnen. Die WO 97/05942 beschreibt einen Luftfilter für die Frischluftzufuhr in einen Kraftfahrzeug-Innenraum, wobei in der zickzackförmig gefalteten Filtermembran eine von einem Ventil verschlossene Bypassöffnung ausgebildet ist, die erst bei übermäßigem Staudruck öffnet. Schließlich zeigt die EP 0634299 einen Luftfilter für die Klimaanlage eines Kraftfahrzeugs, bei dem zwischen dem Filterelement und dem Filtergehäuse ein Luftspalt vorgesehen ist, um bei Zusätzen des aus Stoffgewebe bestehendem Filterelements die Frischluftzufuhr sicherzustellen.

Der vorliegenden Erfindung liegt hiervon ausgehend die Aufgabe zugrunde, ein verbessertes Filtermodul sowie einen verbesserten Luftreiniger der eingangs genannten Art zu schaffen, die Nachteile des Standes der Technik vermeiden und Letzteren in vorteilhafter Weise weiterbilden.

Eine verminderte Luftdurchlässigkeit des Filtermoduls ist insbesondere dann kritisch, wenn der zu reinigende Luftstrom den Kühlluftstrom eines Elektronikgeräts bildet, da ein verminderter Kühlluftstrom zu einer erhöhten thermischen Belastung der elektronischen Komponenten des Elektronikgeräts führt, die zu einem thermisch bedingten Abschalten des Geräts oder im schlimmsten Fall sogar zu Beschädigungen führen kann. Um solche thermischen Überbelastungen zu vermeiden, wurden bislang die Lüfter zur Erzeugung des Kühlluftstroms und/oder die Filtermodule zur Reinigung der Kühlluftstroms deutlich überdimensioniert, so dass auch bei einem Überschreiten der vorgeschriebenen Wartungsintervalle noch ein genügend großer Kühlluftstrom erzeugt wird. Dies führt allerdings wiederum zu einem erhöhten Strombedarf und auch zu einem übermäßigen, störenden Abluftstrom, wenn nicht mit einem kostenaufwändigen geschlossen Kühlluftkreis mit Wärmetauschern gearbeitet wird.

Insbesondere soll nach Aufgabe der Erfindung ein dauerhaft ausreichender Kühlluftstrom ohne Überdimensionierung des Lüfters erreicht werden, bei trotzdem effizienter Entfernung der Luftverunreinigungen und einfacher Handhabung und Servicierung.

Erfindungsgemäß wird diese Aufgabe durch ein Filtermodul gemäß Anspruch 1, einen Luftreiniger nach Anspruch 10, dessen Verwendung gemäß Anspruch 16 sowie ein elektronisches Gerät mit einem solchen Luftreiniger gemäß Anspruch 17 gelöst. Bevorzugte Ausgestaltungen der Erfindung sind Gegenstand der abhängigen Ansprüche.

Es wird zur Lösung der genannten Problematik vorgeschlagen, für den zu reinigenden Luftstrom eine Umgehung des Filtermoduls beziehungsweise dessen Filterschicht für den Fall vorzusehen, dass der vorrangig vorgesehene Weg durch die Filterschicht hindurch zu wenig Luft hindurchlässt, sobald diese im Laufe der Zeit immer mehr zusetzt, also sich ein immer größerer und dichterer Filterkuchen aufbaut. Anstelle mit aufwändigen Mitteln zu versuchen, das Zusetzen der Filterschicht zu vermeiden, gelangt im vorliegenden Fall bei immer mehr zusetzendem Filter automatisch immer mehr Luft durch den Bypass-Kanal. Bei einer derart gebildeten Filterumgehung wird somit auch bei stark oder völlig zugesetzter Filterschicht zumindest ein Mindestluftstrom aufrecht erhalten, der eine Kühlung sicherstellen und eine Überlastung des Lüfters vermeiden kann. Mit anderen Worten ist erfindungsgemäß ein Bypass-Kanal vorgesehen und derart ausgebildet, dass einen Teil des Luftstroms ungefiltert an jeder Filterschicht vorbeiströmen kann. Der Bypass-Kanal besitzt dabei eine lichte Weite, die deutlich größer ist wie das Spaltmaß der Luftdurchtrittsspalte zwischen den länglichen Filterelementen der Filterschicht. Überraschenderweise leidet durch einen solchen Bypass-Kanal die Reinigungswirkung des Filtermoduls kaum, zumindest solange die Filterschicht noch nicht mit Verunreinigungen zugesetzt ist, da in diesem Fall der Großteil des Luftstroms mangels Widerstand den primär vorgesehenen Weg durch die Filterschicht hindurch nimmt. Erst dann, wenn die Filterschicht sich zusetzt und dort der Widerstand für den Luftstrom ansteigt, strömt zusehends Luft durch den genannten Bypass-Kanal.

Um einerseits eine hohe Reinigungswirkung aufrecht zu erhalten, andererseits jedoch genügend Luft auch im zugesetzten Zustand der Filterschicht durch das Filtermodul hindurch zu lassen, ist in Weiterbildung der Erfindung das Verhältnis des Querschnitts des Bypass-Kanals zu der Fläche der Filterschicht, die den zu reinigenden Luftstrom abdeckt, vergleichsweise klein und deutlich unter 0,5.

Insbesondere kann die Strömungsquerschnittsfläche des Bypass-Kanals etwa 10 % bis 30 %, vorzugsweise etwa 15 % bis 25 % der Fläche der Filterschicht betragen, wobei mit der genannten Fläche der Filterschicht nicht die effizient für den Luftdurchtritt zur Verfügung stehende Fläche der Filterschicht, d.h. die Summe der Durchtrittsausnehmungen der Filterschicht gemeint ist, sondern die tatsächliche Fläche der Filterschicht im Luftstrom, die sich aus Durchtrittsausnehmungen und Filtermaterial zusammensetzt, d.h. im Falle einer durch Filterstäbe gebildeten Filterschicht die Summe der Stabquerschnittsflächen und der Flächen der Durchtrittsspalte zwischen den Stäben, soweit diese jeweils im genannten Luftstrom liegen.

Die Summe der Querschnittsfläche des Bypass-Kanals und der genannten Fläche der Filterschicht entspricht dabei der Querschnittsfläche des Luftstroms, mit der dieser auf das Filtermodul zuströmt. In Weiterbildung der Erfindung ist damit die vorgenannte Fläche der Filterschicht, die sich quer im Luftstrom erstreckt, kleiner als die Querschnittsfläche des Luftstroms, d.h. das Filtermodul überdeckt mit seiner zumindest einen luftdurchlässigen Filterschicht nur einen Teil des Luftstromquerschnitts, während der restliche Teil des Luftstromquerschnitts über dem Bypass-Kanal an der Filterschicht ungefiltert vorbeiströmen kann. In Summe betrachtet steht daher dem Luftstrom einerseits die Bypass-Querschnittsfläche und andererseits die Summe der Durchtrittsporen- oder Durchtrittsspaltflächen der Filterschicht zur Verfügung, um an dem Filtermodul vorbei beziehungsweise durch dieses hindurch zu strömen.

In vorteilhafter Weiterbildung der Erfindung ist das Filtermodul unmittelbar angrenzend an einen Lüfter angeordnet, dessen Ansaugluft oder Abluft den zu reinigenden Luftstrom bildet. Besteht der Lüfter beispielsweise aus um eine Drehachse rotatorisch antreibbaren Rotorblättern, sitzt das Filtermodul vorteilhafterweise unmittelbar vor oder unmittelbar hinter den genannten Rotorblättern in einer Ebene im Wesentlichen senkrecht zur Drehachse der Rotorblätter. Den zu reinigenden Luftstrom gibt hierbei der genannte Lüfter, insbesondere dessen Rotorblätter vor, wobei näherungsweise davon ausgegangen werden kann, dass die Querschnittsfläche des Ansaugluftstroms oder Abluftstroms, der den zu reinigenden Luftstrom bildet, der von den Rotorblättern überstrichenen Kreisfläche entspricht. Hiervon ausgehend ist in Weiterbildung der Erfindung vorgesehen, dass die Summe der Querschnittsfläche des Bypass-Kanals und der Fläche der zumindest einen Filterschicht der genannten Querschnittsfläche des Lüfters, d.h. bei entsprechender Lüfterausbildung der von dessen Rotorblättern überstrichenen Kreisfläche, entspricht. Das Verhältnis von Bypass-Fläche zu Filterschichtfläche kann dabei vorteilhafterweise dem vorgenannten Größenbereich entsprechen.

Der Bypass-Kanal kann einarmig ausgebildet sein, so dass die gesamte Bypass-Querschnittsfläche durch einen einzigen Arm gebildet ist und zusammenhängend ist. Alternativ kann der genannte Bypass-Kanal auch zwei separate Kanalzweige beziehungsweise zwei separate Kanäle umfassen, so dass die Gesamtquerschnittsfläche der Filterschicht-Umgehung aufgeteilt ist. In diesem Fall gelten die zuvor genannten, bevorzugten Größenverhältnisse bezogen auf die Summe der Querschnittsflächen der Bypass-Kanalzweige. Bevorzugt ist jedoch ein einziger, großer Bypass-Kanal, da hierdurch die geringste Gefahr von Verstopfungen im Bereich des Bypass-Kanals besteht.

Um die Filterwirkung der nur einen Teil des Luftstroms überdeckenden Filterschicht zu optimieren, kann in Weiterbildung der Erfindung dem Bypass-Kanal eine Ventileinrichtung zugeordnet sein, die bei sauberem, noch nicht zugesetztem Filtermodul den Bypass-Kanal versperrt, so dass die gesamte Luft gefiltert wird, während dann, wenn sich der Filter zunehmend zusetzt, die genannte Ventileinrichtung aufmachen beziehungsweise aktiviert werden kann, um den Bypass-Kanal freizugeben und einen ausreichenden Kühlluftstrom sicherzustellen.

In alternativer Weiterbildung der Erfindung kann auf eine solche Ventileinrichtung jedoch auch verzichtet werden, so dass der Bypass-Kanal permanent geöffnet ist. Erstaunlicherweise hat sich gezeigt, dass bei geeigneter Wahl der Querschnittsflächenverhältnisse von Bypass-Kanal und Filterschicht auch dann kaum ein Verlust an Reinigungswirkung eintritt, wenn der Bypass-Kanal permanent geöffnet ist, zumindest solange die Filterschicht noch nicht stärker zugesetzt ist. Offensichtlich tritt der Luftstrom mangels Widerstand dann durch den primär vorgesehenen Weg durch die Filterschicht hindurch, so dass die Reinigungswirkung auch dann eintritt, wenn der genannte Bypass-Kanal offen ist.

In Weiterbildung der Erfindung ist der genannte Bypass-Kanal in dem Filtermodul integriert und durch eine Aussparung der Filterschicht gebildet, wobei mit einer Aussparung keines der Luftdurchtrittslöcher beziehungsweise Durchgangsspalte der Filterschicht gemeint ist, sondern eine wesentlich größere Aussparung, die die Luft ungefiltert hindurchtreten lässt und dem vorgenannten Problem des Zusetzens nicht ausgesetzt ist.

In Weiterbildung der Erfindung kann die zumindest eine Filterschicht durch eine Vielzahl von länglichen, vorzugsweise stabförmigen Filterelementen gebildet sein, die voneinander beabstandet in der Ebene der Filterschicht angeordnet sind und diese bilden. Vorteilhafterweise können hierbei mehrere solcher Filterschichten hintereinander angeordnet sein, die jeweils von länglichen Filterelementen gebildet sind, wobei vorteilhafterweise die Filterelemente in hintereinander liegenden Filterschichten quer zur Strömungsrichtung versetzt angeordnet sind, so dass der Luftstrom, der durch die Spalte zwischen benachbarten Filterelementen hindurchtritt, durch die mehreren Filterschichten insgesamt hindurch einen serpentinenförmigen beziehungsweise mäanderförmigen Weg nehmen muss beziehungsweise sich in ähnlicher Weise hindurchschlängeln muss.

Die genannten Durchtrittsspalte zwischen den länglichen Filterelementen sind hierbei wesentlich schmaler beziehungsweise kleiner als der genannte Bypass-Kanal, und zwar insbesondere flächenmäßig und hinsichtlich der lichten Weite.

In Weiterbildung der Erfindung besitzt der Bypass-Kanal eine lichte Weite, die bei kreisrunder Ausbildung durch den Durchmesser und bei rechteckiger Ausbildung durch die Länge der Schmalseite gebildet ist, die mindestens doppelt, vorzugsweise mehr als drei Mal und weiter vorzugsweise mehr als fünf Mal so groß ist wie die Breite eines jeden Durchgangsspalts zwischen zwei benachbarten Filterstäben. Beispielsweise kann der genannte Bypass-Kanal dadurch gebildet werden, dass ein- oder zwei Filterstäbe aus einer durch solche Filterstäbe gebildeten Filterschicht herausgenommen sind.

In Weiterbildung der Erfindung ist das Filtermodul derart ausgebildet, dass die zumindest eine Filterschicht nicht von einem umlaufenden, geschlossenen Rahmen eingegrenzt ist, sondern zumindest einen offenen, rahmenlosen Umfangsabschnitt besitzt, an dem der Umfangsrand des Filtermoduls von der Filterschicht beziehungsweise den die Filterschicht bildenden Filterstäben selbst gebildet ist. Diese zur Umfangsseite hin offene Ausbildung der Filterschicht erlaubt es dem zu reinigenden Luftstrom, zumindest in diesem offenen Umfangsabschnitt frei seitlich um die Filterschicht herum auszuweichen, wenn dies beispielweise während dem Zusetzen der Filterschicht notwendig werden sollte. Im Gegensatz zu herkömmlichen Filtermodulen von Elektronikgeräten ist die Filterschicht also nicht von einem rohrförmigen Strömungskanal umschlossen. Die Abwesenheit von den Luftstrom seitlich einschließenden Leitelementen wie Wandungen oder Leitblechen bewirkt eine stärker laminare Strömung auch in den Randbereichen der Filterschicht, so dass insgesamt eine effizientere Reinigung und Anlagerung der Verunreinigungen an der Filterschicht erreicht wird. Während bei herkömmlichen Filtermodulen mit rohrförmig begrenztem Durchtrittskanal die randseitig angeordneten Filterelemente "sauber" bleiben, lagern sich bei randseitig offener Ausbildung der Filterschicht auch an den randseitigen Filterelementen Schmutzpartikel ab, was sich im Betrieb ganz einfach dadurch zeigt, dass auch die randseitigen Filterabschnitte verschmutzen.

In Weiterbildung der Erfindung kann die zumindest eine Filterschicht durch frei auskragend angeordnete, vorzugsweise stabförmige Filterelemente gebildet sein, die zumindest ein ungelagertes, freies Ende besitzen. In Weiterbildung der Erfindung können die genannten stabförmigen Filterelemente durch einen mittig angeordneten Filterhalter gelagert sein, so dass die Filterelementen zwei freie Enden haben. Alternativ kann auch ein endseitig angeordneter Filterhalter zur Lagerung vorgesehen sein, so dass die Filterelemente ein freies Ende haben und im Wesentlichen über ihre gesamte Länge frei auskragen. Eine solche Anordnung der Filterelemente mit freien Enden kann in besonderem Maße die zuvor genannte laminare Umströmung der Filterelemente erzielen, wodurch die Filterelemente eine hohe Reinigungswirkung entfalten. Sollen die Filterstäbe indes eine höhere Stabilität durch ihre Lagerung erhalten, können auch an beiden gegenüberliegenden Enden jeweils vorzugsweise balkenförmige Filterhalter vorgesehen sein. In diesem Falle sind aber vorteilhafterweise die Längsseiten der Filterschicht, die durch die äußeren Filterstäbe gebildet werden, offen ausgebildet.

In Weiterbildung der Erfindung kann zumindest eine Filterschicht durch im Wesentlichen gerade Filterstäbe gebildet sein, die parallel zueinander angeordnet sind.

In Weiterbildung der Erfindung kann auch zumindest eine Filterschicht durch zumindest ein gekrümmtes, längliches Filterelement gebildet sein, das sich vorteilhafterweise schneckenförmig, spiralförmig oder mäanderförmig erstreckt, so dass nebeneinander liegende Filterelementabschnitte erzielt werden, zwischen denen nur schmale Durchtrittsspalte liegen.

Die Filterschicht kann grundsätzlich aus verschiedenen Materialien bestehen. Vorteilhafterweise bildet die Filterschicht einen Nassfilter, der ein chemisch oder physikalisch aktives Fluid enthalten kann, welches die Luftverunreinigungen adsorbiert oder absorbiert. Solche adsorbierenden oder absorbierenden Filterfluide können beispielsweise Öle, Emulsionen oder Flüssigkeiten umfassen, je nachdem, welcher Art die zu entfernenden Verunreinigungen sind. Optional können dem Fluid Additive beigesetzt sein, die antibakteriell, antiviral, antimyotisch oder fungizid wirken. Derartige Fluide beziehungsweise Fluidmischungen werden vorteilhafterweise von einem Trägermaterial getragen, das mit dem genannten Fluid befeuchtet ist. Vorteilhafterweise können in der vorgenannten Weise stabförmige beziehungsweise längliche Filterelemente aus einem porösen Schaumstoff vorgesehen sein, der mit dem genannten Fluid befeuchtet ist.

Alternativ können die Filterschichten jedoch auch - je nach zu entfernenden Luftverunreinigungen auch durch Gewebeschichten, Sandwichstrukturen aus verschiedenen porösen Lagen wie beispielsweise Textilgeweben, feinporigen Gitterstrukturen und dergleichen bestehen.

Der erfindungsgemäße Luftreiniger kann weiterhin einen Montagerahmen aufweisen, welcher das Filtermodul zumindest teilweise umgibt. Vorteilhafterweise weist der Monatagerahmen dabei eine Aussparung auf, in welche das Filtermodul in Richtung des Luftflusses einschiebbar ist, d.h. senkrecht zur Filterebene. Vorteilhafterweise weist die Aussparung hierfür eine Querschnittsfläche auf, welche größer oder gleich der Summe aus der Filterquerschnittsfläche und der Bypassquerschnittsfläche ist. Insbesondere ist die Querschnittsfläche des Montagerahmens dabei größer oder gleich der Querschnittsfläche des Filtermoduls einschließlich des Bypassbereichs. Vorteilhafterweise kann das Filtermodul dabei als ganzes in den Montagerahmen eingeschoben werden.

Weiterhin vorteilhafterweise umfasst der Luftreiniger eine Montageanordnung, mit welcher das Filtermodul lösbar verbindbar ist. Vorteilhafterweise kann es sich bei dieser Montageanordnung um den oben beschriebenen Montagerahmen handeln. Es sind jedoch auch andere Montageanordnungen denkbar, an welchen das Filtermodul lösbar befestigt werden kann. Hierdurch ist ein einfaches Auswechseln des Filtermoduls möglich. Vorteilhafterweise erfolgt die Verbindung dabei durch Reibschluss. So kann das Filtermodul einfach in eine Aufnahme eingeschoben werden und ist dort durch Presssitz gehalten. Vorteilhafterweise ist das Filtermodul dabei in einen Montagerahmen einschließbar und an diesem durch Presssitz gehalten.

Weiterhin kann der erfindungsgemäße Luftreiniger ein Gehäuse aufweisen, durch welches der Luftstrom von einer Eingangsöffnung durch das Filtermodul zu einer Ausgangsöffnung geleitet wird. Vorteilhafterweise wird dabei der Luftstrom durch das Gehäuse auf dem Weg von der Eingangsöffnung zum Filtermodul und/oder vom Filtermodul zur Ausgangsöffnung umgelenkt. Vorteilhafterweise erfolgt dabei eine Umlenkung von mehr als 45°, weiterhin vorteilhafterweise um ca. 90°. Die Öffnung bzw. die Wände des Gehäuses sind dabei so ausgeführt, dass die Luft nicht bereits senkrecht zur Durchströmungsebene des Filtermoduls in den Luftreiniger ein- oder aus diesem ausströmt, sondern umgelenkt wird, bevor oder nachdem sie das Filtermodul passiert. Vorteilhafterweise strömt die Luft dabei parallel zur Durchströmungsebene des Filtermoduls in das Gehäuse ein. Hierdurch kann eine besonders platzsparende und leicht zu wartende Anordnung getroffen werden.

Alternativ oder zusätzlich kann dabei ein Radiallüfter eingesetzt werden, welcher den Luftstrom axial aufnimmt und raidal nach außen ausbläst. Die Gehäusewände können den Luftstrom weiterhin umlenken.

In weiterer Ausgestaltung der Erfindung kann vorgesehen sein, dass das Filtermodul und/oder ein Lüfter des Luftreinigers auf einem Trägerelement montiert und mit Hilfe dieses verschiebbar sind. Vorteilhafterweise sind dabei Filtermodul und Lüfter jeweils auf separaten Trägerelementen montiert und jeweils separat über diese verschiebbar. Hierdurch ist eine leichte Montage beziehungsweise Auswechselbarkeit gegeben.

Neben der Verwendung des oben beschriebenen Bypasses umfasst die vorliegende Erfindung einen zweiten Aspekt, welcher auch unabhängig von der bisher beschriebenen Erfindung Gegenstand der vorliegenden Anmeldung ist.
Die vorliegende Erfindung umfasst dabei einen Luftreiniger, insbesondere einen Kühlluftreiniger eines Elektronikgeräts, zum Entfernen von Verschmutzungen aus einem Luftstrom, mit einem Filtermodul, das zumindest eine durchströmbare Filterschicht zum Anlagern der Verschmutzungen an der Filterschicht umfasst. Erfindungsgemäß ist dabei in dem zeiten Aspekt vorgesehen, dass der Luftreiniger als Luftreinigungsmodul ausgeführt ist, welches lösbar an einer Aufnahme eines Gerätegehäuses befestigbar ist, um zum Wechseln des Filtermoduls von der Aufnahme gelöst werden zu können. Diese Ausführung des erfindungsgemäßen Luftreinigers hat den Vorteil, dass das Filtermodul erheblich einfacher zu wechseln ist als bei bisherigen Luftreinigern, welche üblicherweise fest mit dem Gerätegehäuse verbunden waren, beispielsweise mit diesen verschraubt oder vernietet waren.

Vorteilhafterweise ist das Lösen der Befestigung des Luftreinigungsmoduls vom Gerätegehäuse ohne die Verwendung von Werkzeug möglich, so dass zum Wechseln des Filtermoduls das Luftreinigungsmodul ohne Werkzeug gelöst und in eine Position gebracht werden kann, in welcher das Filtermodul leichter zugänglich ist. Vorteilhafterweise ist auch die Befestigung ohne Werkzeug möglich.

Vorteilhafterweise umfasst das Luftreinigungsmodul mindestens ein Montageelement, an welchem das Filtermodul befestigt ist. Bei dem Montageelement kann es sich dabei beispielsweise um den oben dargestellten Montagerahmen handeln. Vorteilhafterweise ist das Filtermodul dabei an dem Montagerahmen lösbar befestigbar ist, welcher seinerseits lösbar an dem Gerätegehäuse befestigbar ist.

Weiterhin vorteilhafterweise umfasst das Luftreinigungsmodul weiterhin einen Lüfter, durch welchen der Luftstrom durch das Filtermodul bewegt wird. Vorteilhafterweise ist der Lüfter dabei über Leitung an einer Stromquelle des Elektronikgeräts angeschlossen, welche ausreichend lang sind, um zum Wechseln des Filtermoduls das Luftreinigungsmodul in eine Position zu bewegen, in welcher das Filtermodul einfach zugänglich ist. Vorteilhafterweise kann dabei das Luftreinigungsmodul komplett aus dem Gerätegehäuse entnommen werden.

Vorteilhafterweise erfolgt die Befestigung dabei durch ein elastisches Element. Dies hat zum einen den Vorteil, dass die Befestigung leicht per Hand lösbar ist und das Luftreinigungsmodul so einfach entnommen und wieder befestigt werden kann. Zudem hat der Einsatz eines elastischen Elementes den Vorteil, dass Vibrationen des Luftreinigungsmoduls problemlos aufgenommen und kompensiert werden können. Vorteilhafterweise handelt es sich bei dem elastischen Element dabei um ein längenveränderliches elastisches Element, insbesondere um eine Spiralfeder.

Vorteilhafterweise ist das elastische Element dabei an dem Gerätegehäuse befestigt und presst das Luftreinigungsmodul an die Aufnahme. Vorteilhafterweise ist dabei ein längenveränderliches elastisches Element, insbesondere eine Spiralfeder, zwischen zwei Befestigungspunkten am Gerätegehäuse gespannt und presst dabei das Luftreinigungsmodul, welches zwischen diesen beiden Befestigungspunkten angeordnet ist, gegen die Aufnahme. Das Luftreinigungsmodul ist so einfach zu entnehmen, indem die Länge des längenveränderlichen elastischen Elements durch Ziehen so vergrößert wird, dass das Luftreinigungsmodel von der Aufnahme gezogen werden kann.

Vorteilhafterweise weist die Aufnahme Halterungselemente auf, welche ein seitliches Verschieben des Luftreinigungsmoduls verhindern. Vorteilhafterweise weist die Aufnahme eine Luftdurchgangsöffnung auf, durch welche Luft von dem Luftreinigungsmodul in einen zu belüfteten Raum fließt.

Ein lösbar mit einer Aufnahme verbindbares Luftreinigungsmodul ist unabhängig von der Verwendung eines Bypasses von Vorteil und Gegenstand der vorliegenden Erfindung. In einer besonders vorteilhaften Ausgestaltung der vorliegenden Erfindung ist ein solches Luftreinigungsmodul jedoch mit einem erfindungsgemäßen Bypass kombiniert. Insbesondere handelt es sich daher bei dem Luftreinigungsmodul um einen Luftreiniger, wie er weiter oben hinsichtlich des Bypasses beschrieben wurde.

Die vorliegende Erfindung umfasst weiterhin ein elektronisches Gerät mit einem Luftreiniger, wie oben beschrieben wurde. Insbesondere handelt es sich bei dem elektronischen Gerät dabei um einen Unterhaltungs-, Spiel- und/oder Wettautomaten. Das elektronische Gerät weist dabei ein Gerätegehäuse auf, wobei der Luftreiniger am oder im Inneren des Gerätegehäuses angeordnet ist.

Handelt es sich bei dem Luftreiniger um ein Luftreinigungsmodul, welches lösbar an dem Gerätegehäuse befestigt ist, so weist das Gerätegehäuse hierfür vorteilhafterweise eine entsprechende Aufnahme auf. Weiterhin ist an dem Gerätegehäuse vorteilhafterweise ein elastisches Element angeordnet, wie dies oben näher beschrieben wurde.

Die Erfindung wird nachfolgend anhand bevorzugter Ausführungsbeispiele und zugehöriger Zeichnungen näher erläutert. In der Zeichnungen zeigen:
- Fig. 1:: eine perspektivische, schematische Darstellung des zu reinigenden Luftstroms und des darin angeordneten Filtermoduls, das nach einer vorteilhaften Ausführung der Erfindung eine sich quer in dem Luftstrom erstreckende Filterschicht und einen um die Filterschicht herum führenden Bypass-Kanal besitzt,
- Fig. 2:: eine schematische Draufsicht auf die durch Filterstäbe gebildete Filterschicht des Filtermoduls aus Fig. 1,
- Fig. 3:: eine Draufsicht auf den Lüfter zur Erzeugung des Luftstroms, der teilweise durch die Filterschicht aus Fig. 2 hindurch geleitet wird,
- Fig. 4:: eine Draufsicht auf das unmittelbar vor den Lüfter aus Figur 3 montierte Filtermodul, die die Überdeckung von Filterschicht und Rotorblättern des Lüfters und den seitlich vorgesehenen Bypass-Kanal zeigt,
- Fig. 5:: eine Seitenansicht des Filtermoduls und des damit verbundenen Lüfters in einer schematischen Darstellung, die die begrenzte Überdeckung der Filterschicht des Filtermoduls und des den Luftstrom erzeugenden Kühlers zeigt,
- Fig. 6:: eine perspektivische Darstellung des zweischichtigen Filtermoduls aus den vorhergehenden Figuren,
- Fig. 7:: eine schematische Draufsicht auf ein Filtermodul nach einer weiteren Ausführung der Erfindung, bei dem der Bypass-Kanal mittig angeordnet ist und der die Filterelemente haltende Filterhalter sich diagonal erstreckt,
- Fig. 8:: eine Draufsicht auf den Lüfter zur Erzeugung des Luftstroms durch das Filtermodul aus Fig. 7,
- Fig. 9:: eine Draufsicht auf das an den Lüfter aus Fig. 8 montierte Filtermodul aus Fig. 7, das die Überdeckung von Filtermodul und Lüfter und die Lager des Bypass-Kanals zeigt,
- Fig. 10:: eine Darstellung eines Filtermoduls nach einer weiteren Ausführung der Erfindung mit spiralförmig gekrümmten, länglichen Filterelementen, die zwei hintereinander liegende Filterlagen bilden, wobei Teilansicht A eine Draufsicht auf das Filtermodul und Teilansicht B eine Seitenansicht des Filtermoduls und den hindurch und vorbei strömenden Luftstrom zeigt, und
- Fig. 11:: eine Seitenansicht des Filtermoduls aus Fig. 10, wenn dieses an einen Lüfter zur Erzeugung des Luftstroms durch das Filtermodul montiert ist, wobei das Filtermodul auf der den Rotorblättern des Lüfters abgewandten Rückseite des Lüftermotors montiert ist, und
- Fig. 12:: eine Ansicht eines Filtermoduls, das zwei Filterschichten mit jeweils geraden Filterstäben aufweist, wobei die Filterstäbe an den Filterstab-Endabschnitten von Halteelementen gehalten werden; sowie eine Ansicht eines Montagerahmens, in den das Filtermodul einsetzbar ist, und
- Fig. 13:: ein Ausführungsbeispiel des zweiten Aspekts der vorliegenden Erfindung, bei welchem der Luftreiniger als Luftreinigungsmodul ausgeführt ist, der lösbar an einer Aufnahme eines Gerätegehäuses befestigt ist, und
- Fig. 14:: eine perspektivische Darstellung eines Teilbereiches eines Elektronikgerätegehäuses betreffend eine Belüftungsanordnung für die Belüftung der Elektronikeinheit, und
- Fig. 15:: eine Detailansicht zu der in Fig. 14 gezeigten Anordnung, und
- Fig. 16:: eine weitere Detailansicht zu der in Fig. 14 und Fig 15 gezeigten Anordnung, und
- Fig. 17:: eine verschiebbare Halterung für ein Filtermodul für die in den Fig. 14-15 gezeigte Belüftungsanordnung.

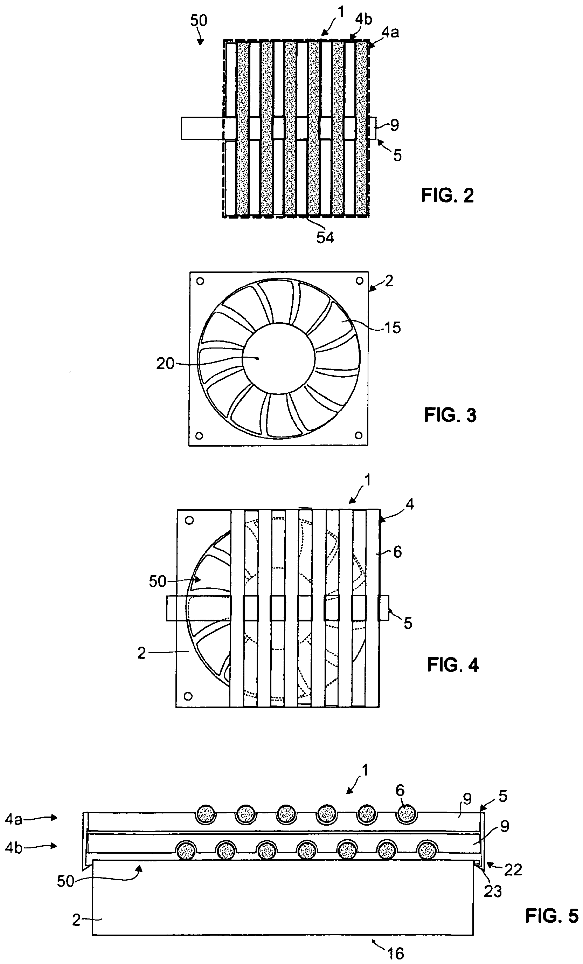

Bei der in den Figuren 2 bis 6 gezeigten Ausführung umfasst der Luftreiniger ein Filtermodul 1 sowie einen Lüfter 2, mit welchem Lüfter 2 ein Luftstrom erzeugt wird, welcher Luftstrom von dem genannten Filtermodul 1 gereinigt wird. Vorteilhafterweise ist hierbei der genannte Luftreiniger im Inneren eines nicht eigens dargestellten Gehäuses eines Elektronikgeräts wie beispielsweise eines Spielautomaten montiert, wobei der genannte Luftstrom zur Kühlung der Elektronikkomponenten des genannten Geräts dient.
Es kann erwähnt werden, dass der Luftreiniger auch in einem Computer (PC) mit einem Big-, Midi- oder Mini-Tower-Gehäuse oder einem Desktop-Gehäuse oder einer Serverstation, einem Industrie-PC, in Schaltschränken oder Verteilerkästen verwendet werden können.

Wie Fig. 2 zeigt, kann das Filtermodul 1 aus länglichen, in der gezeichneten Ausführung stabförmigen Filterelementen 6 bestehen, die - vergleiche Fig. 5 - in zwei Ebenen hintereinander angeordnet sein können, so dass das Filtermodul 1, zwei (2) Filterschichten 4 besitzt, die sich quer im genannten Luftstrom 52 erstrecken. Jede der genannten Filterschichten 4 wird hierbei von einer Vielzahl von geraden, stabförmigen Filterelementen 6 gebildet, welche Filterelemente 6 sich im Wesentlichen parallel zueinander, geringfügig voneinander beabstandet erstrecken, so dass zwischen den benachbarten Filterelementen 6 schmale Durchtrittsspalte 53 verbleiben. Eine gedachte Hülle einer solchen Filterschicht 4 könnte der eines flachen Quaders ähnlich sein, wobei dessen Dicke im wesentlichen durch die Dicke (d.h. den Durchmesser) der stabförmigen Filterelemente 6 gebildet ist.

Wie Fig. 5 zeigt, sind hierbei die Filterelemente 6 in den in Luftstromrichtung hintereinander liegenden Filterschichten 4 quer zur Strömungsrichtung zu einander versetzt, insbesondere derart, dass sich ein Filterstab der hinteren Filterschicht dort erstreckt, wo die vordere Filterschicht einen Durchgangsspalt 53 besitzt, und umgekehrt die vordere Filterschicht dort einen Filterstab besitzt, wo die hintere Filterschicht einen Durchgangsspalt 53 besitzt. Hierdurch strömt die durch das Filtermodul 1 hindurchtretende Luft auf einem serpentinenförmigen beziehungsweise schlängelden Weg durch die Filterschichten hindurch.

Die genannten Filterelemente 6 können vorteilhafterweise in der eingangs genannten Weise aus porösem Schaumstoff bestehen und mit einem geeigneten Fluid befeuchtet sein, so dass die Filterschichten 4 einen Nassfilter bilden.

Die genannten Filterelemente 6 der Filterschichten 4 sind hierbei vorteilhafterweise an einem gemeinsamen Filterhalter 5 befestigt, welcher Filterhalter 5 sich in der gezeichneten Ausführungsform etwa in der Längsmitte der Filterelemente 6 quer hierzu erstreckt. Dementsprechend besitzen die genannten Filterelemente 6 zwei frei auskragende Enden. Hierdurch besitzt jede der Filterschichten 4 insgesamt betrachtet offene Umfangsseiten frei von den Luftstrom begrenzenden Leitblechen oder Rohrwandungen, d.h. der an den Rändern einer jeden Filterschicht 4 vorbei strömende Luftstrom wird nicht radial begrenzt.

Der Lüfter 2 zur Erzeugung des Luftstroms kann grundsätzlich verschieden ausgebildet sein. Gemäß der gezeichneten Ausführungsform kann der Lüfter 2 Rotorblätter 15 umfassen, die sich radial von einer Antriebsachse 20 erstrecken, um welche Antriebsachse 20 die genannten Rotorblätter 15 von einem Lüftermotor 16 rotatorisch angetrieben werden.

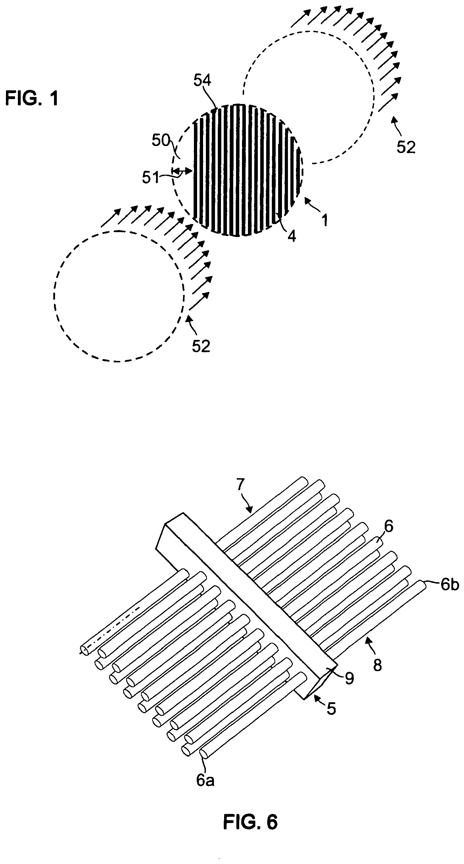

Wie die Figuren 1 und 4 zeigen, erstreckt sich das Filtermodul 1 beziehungsweise deren Filterschichten 4 nicht über den gesamten Querschnitt des erzeugten Luftstroms 52 beziehungsweise den gesamten projizierten Querschnitts des Lüfters 2, der von den umlaufenden Rotorblättern 15 definiert wird, sondern lässt seitlich einen Bypass-Kanal 50 frei, in dem der Luftstrom 52 frei und ungefiltert an den Filterschichten 4 vorbeitreten kann. Der genannte Bypass-Kanal 50 beträgt flächenmäßig etwa 15 % bis 25 % der Filterschichtfläche 54 der Filterschichten 4, die in Fig. 2 gezeigt ist.

Die lichte Weite 51 des Bypass-Kanals 50, die dessen minimale Querschnittserstreckung meint, ist dabei ein Vielfaches größer als die lichte Weite 61 der Durchtrittsspalte 53 zwischen den Filterelementen 6, vergleiche Figuren 1 und 4.

Wie Fig. 5 zeigt, ist das Filtermodul 1 unmittelbar mit dem Lüfter 2 gekoppelt, wobei der genannte Filterhalter 5 mittels geeigneten Befestigungsmitteln 23 auf dem Lüfter 2 befestigt sein kann. Gemäß Fig. 5 kann der genannte Filterhalter 5 auch aus zwei Haltebalken 9 bestehen, die jeweils eine Filterschicht 4 umfassend jeweils eine Vielzahl von Filterelementen 6 tragen kann, wobei die genannten Haltebalken 9 Rücken an Rücken liegen.
Wie Fig. 1 zeigt, überdeckt das Filtermodul 1 mit seinen Filterschichten 4 den größten Teil der Querschnittsfläche des Luftstroms 52, so dass bei frischem, noch nicht zugesetztem Filter der Großteil des Luftstroms 52 durch die Filterschichten 4 hindurchtritt, da dort kein großer Strömungswiderstand auftritt. Nur ein kleiner Teil des Luftstroms 52 tritt durch den genannten Bypass-Kanal 50 hindurch.

Setzt sich jedoch das Filtermodul 1 beziehungsweise deren Filterschichten 4 zu, so dass dort ein Staudruck entsteht beziehungsweise ansteigt, weicht der Luftstrom 52 sozusagen aus und tritt mit immer größer werdendem Anteil/Menge durch den Bypass-Kanal 50 hindurch. Dies stellt sicher, dass immer noch ein ausreichender Luftstrom erzeugt wird, der als Kühlluftstrom verwendet werden kann.

Wie Fig. 1 zeigt, überdeckt das Filtermodul 1 mit seinen Filterschichten 4 vorteilhafterweise etwa 75 % bis 85 % der Querschnittsfläche des Luftstroms 52 und/oder der vom Lüfter 2 und dessen Rotorblättern 15 überstrichenen Querschnittsfläche, während die restliche Querschnittsfläche des Luftstroms 52 frei bleibt. Dabei müssen die Filterschichten 4 mit ihren äußeren Rändern nicht dem angenommen kreisrunden Lüfter und/oder dem zylindrisch angenommenen Luftstrom entsprechen, vielmehr können die Filterschichten 4 darüber hinausragen, so dass die eingangs genannten Flächenverhältnisse die vom Luftstrom überdeckte Fläche der Filterschichten 4 zu der Querschnittsfläche des Bypass-Kanals 50 meint.

Wie Fig. 6 zeigt, besitzt jede Filterschicht 4 mehrere offene Umfangsseitenabschnitte. Einerseits sind die Längsseiten offen, die von den äußersten Filterelementen 7 und 8 gebildet sind, vergleiche Fig. 6. Zum anderen sind die stirnseitigen Enden der Filterschicht 4 offen, die von den freien Enden 6a und 6b gebildet werden, vergleiche Fig. 6.

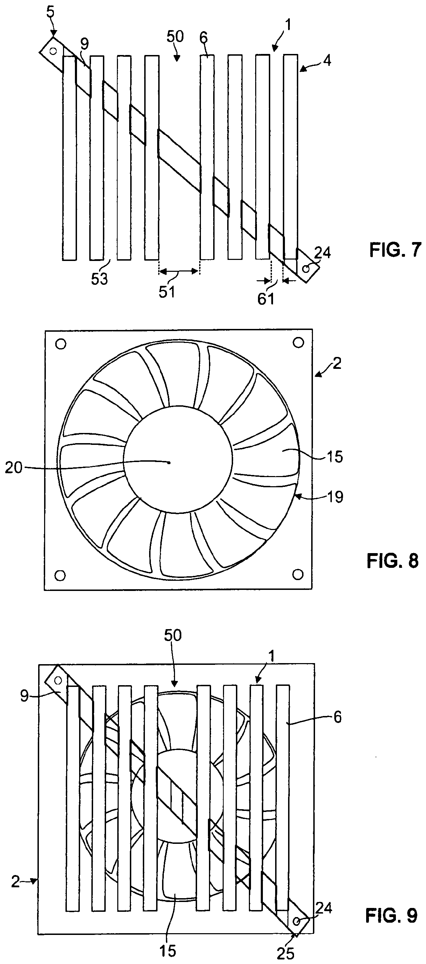

Die Figuren 7 bis 9 zeigen eine alternative Ausführung der Erfindung, wobei der wesentliche Unterschied zu der in den Figuren 1 bis 6 gezeigten Ausführung darin besteht, dass der Bypass-Kanal 50 mittig bezüglich den Filterschichten 4 angeordnet ist und im Wesentlichen dadurch erzeugt ist, dass in einem mittleren Abschnitt der Filterschichten 4 jeweils zumindest ein stabförmiges Filterelement 6 weggelassen ist, so dass eine mittige, längliche Aussparung gebildet ist, welche den Bypass-Kanal 50 bildet, vergleiche Fig. 7.

Zum anderen zeigen die Figuren 7 und 9, dass sich der balkenförmige Filterhalter 5, an dem die Filterelemente 6 befestigt sind, sich auch diagonal erstrecken kann, so dass die äußersten Filterelemente an jeweils einem Ende gehalten sind, während die zur Mitte hin angeordneten Filterelemente 6 mittig gehalten sind und zu zwei Seiten hin frei auskragen. Im Übrigen kann auf die Beschreibung der vorangehenden Ausführung verwiesen werden.

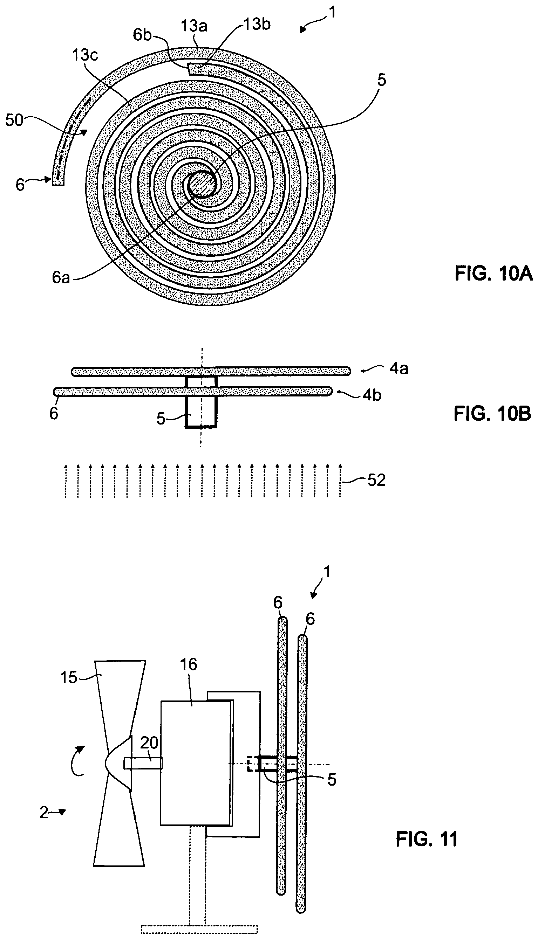

Die Figuren 10 und 11 zeigen eine weitere Ausführung, bei der das Filtermodul 1 ähnlich den vorangehenden Ausführungen zwei hintereinander angeordnete Filterschichten 4 mit zueinander quer zur Strömungsrichtung versetzt angeordneten Filterelementen 6 umfasst. Die genannten Filterelemente 6 sind ebenfalls längliche, stabförmige Gebilde, die jedoch nicht in Form gerader Stäbe, sondern in Form spiralförmig gekrümmter Stäbe ausgebildet sind, die auf einem gemeinsamen, zentralen Filterhalter 5 befestigt sind, der sozusagen der Achse der Spiralform der Filterelemente 6 entspricht. Wie Fig. 10 zeigt, sind die jeweils spiralförmigen Filterelemente 6 der beiden Filterschichten 4a und 4b zueinander in Luftströmrichtung gesehen so versetzt, dass wiederum dort, wo eine vordere Filterschicht 4b ihre Durchtrittsspalte 53 besitzt, sich das Filterelement 6 der hinteren Filterschicht 4a erstreckt, und umgekehrt das Filterelement der vorderen Filterschicht 4b sich dort erstreckt, wo die hintere Filterschicht 4a jeweils den Durchgangsspalt 53 besitzt.

Wie Fig. 10 zeigt, besitzen die Filterschichten 4 jedoch auch bei dieser Ausführung einen Bypass-Kanal 50, durch den ein Teil des Luftstroms 52 frei und ungefiltert und ungehindert hindurchtreten kann. Der genannte Bypass-Kanal 50 kann hier durch Verkürzung beziehungsweise Aussparung zumindest eines der Filterelemente 6 gebildet sein, so dass sich eine freie Durchgangsausnehmung in den Filterschichten 4 ausbildet, vergleiche Fig. 10A.

Wie Fig. 11 zeigt, kann das Filtermodul 1 gemäß Fig. 10 vorteilhafterweise auf der Rückseite des Lüftermotors 16 befestigt sein, und zwar mit dem genannten zentralen Filterhalter 5, so dass sich das Filtermodul 1 mit seinen Filterschichten 4 quer in dem Luftstrom 52 erstreckt.

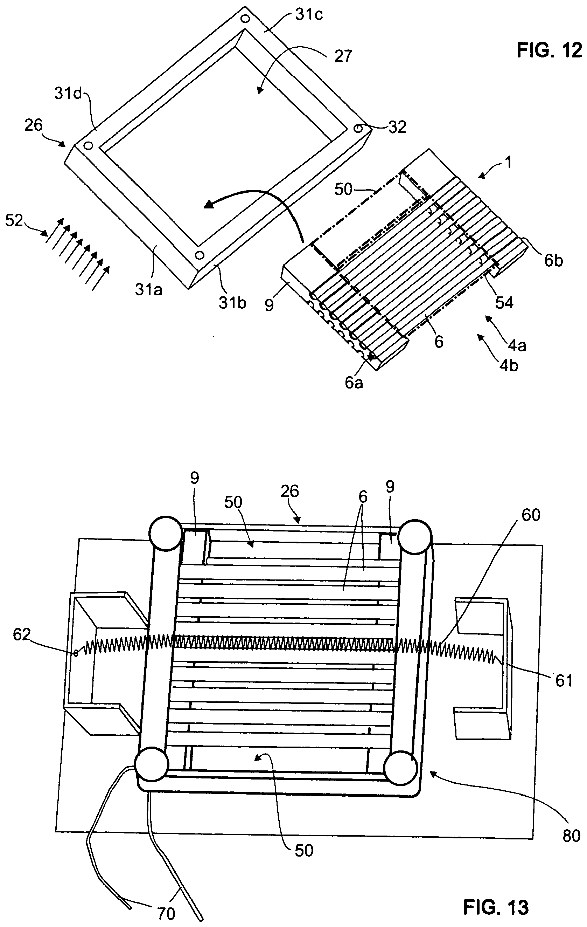

Die Fig. 12 zeigt eine Ansicht eines Filtermoduls 1, das zwei Filterschichten-Ebenen 4a, 4b mit jeweils einer Anzahl an geraden Filterstäben 6 aufweist, wobei die Filterstäbe 6 an den Filterstab-Endabschnitten 6a, 6b von Halteelementen 9 in freitragender Weise gehalten und positioniert werden. Weiters zeigt die Figur 12 eine Ansicht eines Montagerahmens 26, in den das Filtermodul 1 einsetzbar ist. Der Montagerahmen 26 ist im vorliegenden Fall rechteckig und mit den vier Schenkeln 31a, 31b, 31c, und 31d ringförmig geschlossen und umfaßt eine Einfügungaussparung 27, die das Filtermodul 1 gesehen in Richtung des Luftstromes 52 und/oder senkrecht zur Fläche, die durch die Filterschicht-Ebene 4 definiert wird, umgibt. Dieses ermöglicht es, dass das Filtermodul 1 in einfacher Weise in den Montagerahmen 26 eingesetzt beziehungsweise daraus entfernt werden kann.

Vorzugsweise wird die Größe und/oder die Maße der Einfügungaussparung 27 der Größe und/oder die Maße und/oder die Form des Filtermodul 1 so angepasst, dass das Filtermodul 1 in der Einfügungaussparung 27 in Form einer Presspassung gehalten wird. Insbesondere entspricht die Breite der Einfügungaussparung 27 der Länge des Filtermoduls 1 in der Richtung der Längsmittellinie der geraden Filterstäbe. Infolgedessen können die Filterstäbe als Druckelemente benutzt werden, welche die notwendige Reibung an den Enden der Filtersäbe bereitstellen, um eine Befestigung des Filtermoduls 1 im Montagerahmen 26 sicherzustellen.

Alternativ oder in Kombination könnte zumindest eines der Halteelemente 9 mit seiner Strinseite und den entsprechenden Rahmenschenkeln des Montagerahmens 26 eine geeignete Presspassung ausbilden.

Der Montagerahmen 26 dient zur indirekten Montage des Filtermoduls 1 an ein jegliches geeignete Montageelement, beispielsweise an ein Gehäuse des vorstehend erwähnten Lüfters 2.

In Figur 13 ist ein Ausführungsbeispiel eines Luftreinigers gezeigt, bei welchem der zweite Aspekt der vorliegenden Erfindung verwirklicht ist. Der Luftreiniger bildet dabei ein Luftreinigungsmodul, welches lösbar an einer Aufnahme eines Gerätegehäuses 80 befestigt ist. Die Aufnahme liegt dabei in Figur 13 hinter dem Luftreinigungsmodul, so dass sie auf der Zeichnung nicht zu erkennen ist. Vorteilhafterweise weist die Aufnahme dabei eine Luftdurchtrittsöffnung auf, welche mit dem Luftreinigungsmodul in Verbindung steht, und durch welche Luft durch das Luftreinigungsmodul hindurch in einen Lüftungsbereich gelangen kann.

Das Luftreinigungsmodul weist dabei wiederum einen Montagerahmen 26 auf, in welchen das Filtermodul einschiebbar ist. Zum Wechseln des Filtermoduls kann nun das gesamte Luftreinigungsmodul von der Aufnahme gelöst werden. Die lösbare Befestigung erfolgt dabei über eine Spiralfeder 60, welche zwischen zwei Befestigungspunkten 61 und 62 am Gerätegehäuse gespannt ist. Das Luftreinigungsmodul ist dabei zwischen den beiden Befestigungsbereichen 61 und 62 angeordnet, so dass die Spiralfeder 60 das Luftreinigungsmodul gegen die Aufnahme des Gerätegehäuses presst. Die Spiralfeder 60 verläuft dabei ungefähr mittig über das Luftreinigungsmodul. Das Luftreinigungsmodul kann so problemlos von der Aufnahme gelöst und dann seitlich unter der Spiralfeder herausgezogen werden.

Der Montagerahmen 26 ist dabei so an der Aufnahme des Gerätegehäuses angeordnet, dass die Filterebene parallel zu der Wandung des Gehäuses verläuft, an welcher die Aufnahme für das Luftreinigungsmodul angeordnet ist. Die Spiralfeder 60 presst dabei die beiden Seitenbalken des Montagerahmens gegen das Gehäuse.

Das Luftreinigungsmodul weist dabei weiterhin einen Lüfter auf, welcher mit dem Montagerahmen eine Baueinheit bildet. Hierdurch kann das gesamte Luftreinigungsmodul mit Montagerahmen, Filtermodul und Lüfter zum Wechseln des Filtermoduls entnommen werden. Der Lüfter ist dabei über elektrische Leitungen 70 an eine Stromversorgung angeschlossen. Die Leitungen 70 sind dabei so lang, dass das Luftreinigungsmodul komplett aus dem Gehäuse entnommen werden kann.

Das in Fig. 13 gezeigte Luftreinigungsmodul kann mit beliebigen Filtermodulen betrieben werden, auch solchen, welche keinen Bypass-Bereich aufweisen. Bei dem in Figur 13 gezeigten Ausführungsbeispiel ist jedoch das Luftreinigungsmodul mit einem Filtermodul kombiniert, welches ein Bypass-Bereich 50 aufweist.

Das Filtermodul entspricht dabei in seinem grundsätzlichem Aufbau dem in Figur 12 gezeigten Filtermodul, wobei Filterelemente 6 zwischen zwei Haltebalken 9 angeordnet sind, welche als Filterstabhalter dienen. Die Haltebalken 9 werden dabei in den Montagerahmen 26 eingeschoben und sind an diesem durch Presssitz gehaltert.

Das Filtermodul weist dabei zwei Bypass-Bereiche 50 auf. Hierfür weisen die beiden Haltebalken 9 jeweils Endbereiche auf, in welchen keine Filterelemente vorgesehen sind. Selbstverständlich kann ein solches Filtermodul auch unabhängig von dem in Figur 13 gezeigten Luftreinigungsmodul eingesetzt werden.

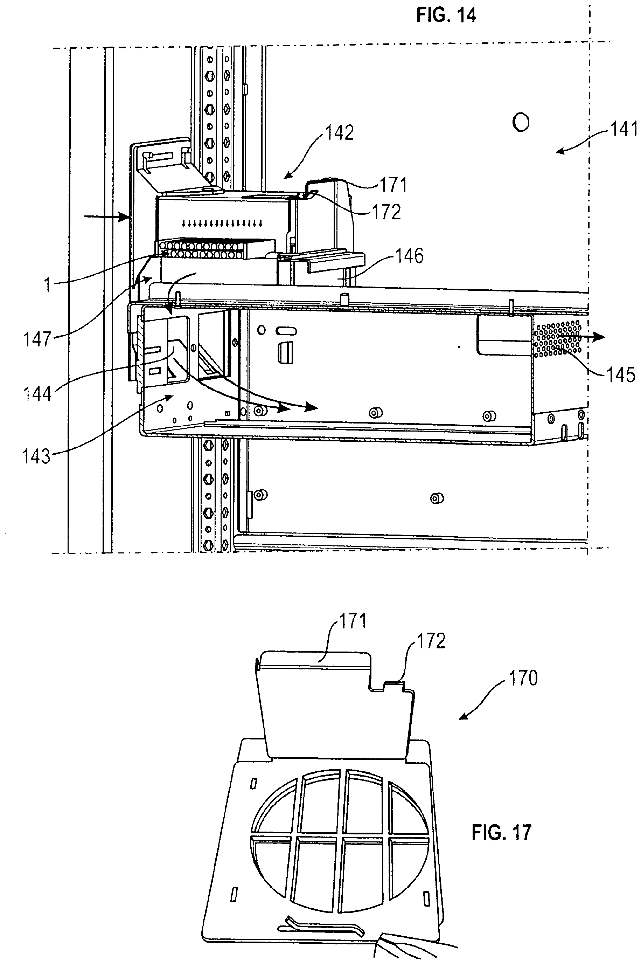

Die Figur 14 zeigt in einer perspektivischen Darstellung einen Teilbereich eines Gehäuses 141 eines elektronischen Spielgerätes, und zwar jenen betreffend einer Belüftungsanordnung 142 für die Belüftung der Elektronikeinheit des Spielgeräes. Im vorliegenden Fall handelt es sich bei dem Spielgerät um ein "Slot-gerät". Die Elektronikeinheit besteht in diesem Fall aus einer Prozessorplatine und ist in dem vorgesehenen Elektronikbereich 143 im Gehäuse montierbar, wobei der Elektronikbereich 143 in sich gekapselt ist und zumindest eine Luftzutrittsöffnung 144 sowie zumindest eine Luftaustrittsöffnung 145 aufweist. Die Belüftungsanordnung 142 umfasst im Wesentlichen einen Lüfter 146, ein Filtermodul 1 sowie ein Luftführungskanal 147. Die Belüftungsanordnung 142 ist unmittelbar mit Luftzutrittsöffnung 144 gekoppelt. Es sind sowohl das Filtermodul 1 als auch der Lüfter 146 auf jeweils separaten Trägerelementen montiert und mit Hilfe dieser verschiebbar ausgebildet, so dass eine leichte Montage beziehungsweise Auswechselbarkeit möglich ist.

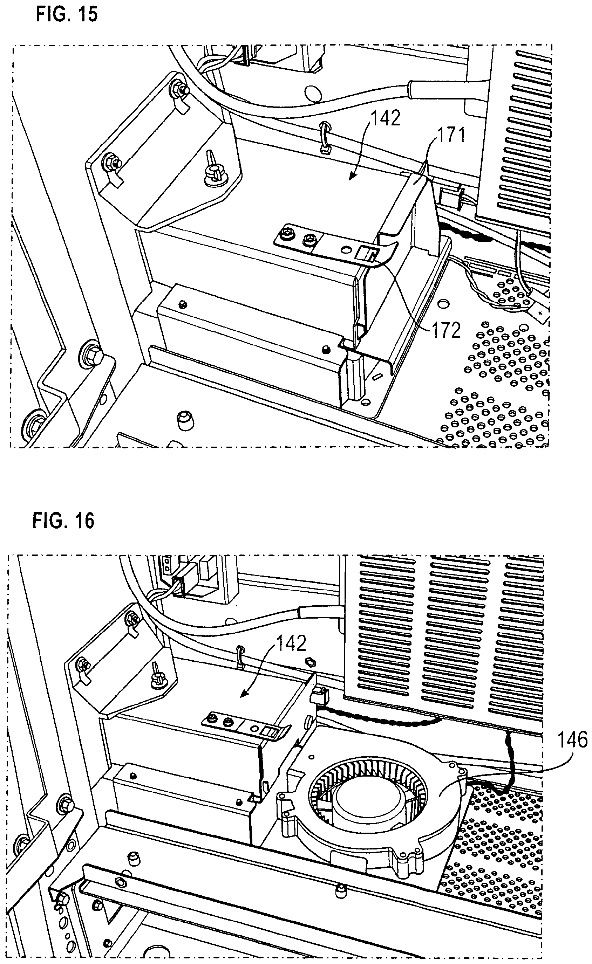

Wie Fig. 15 näher zeigt, ist der Lüfter 146 ist im vorliegenden Fall ein Radiallüfter, d.h. die Luft wird axial angesaugt und, um 90° gedreht, radial, also senkrecht zur Ansaugrichtung ausgeblasen und gelangt über einen Umlenkkanal 147 durch die Luftzutrittsöffnung 144 in den Elektronikbereich 143 und in weiterer Folge über die Luftaustrittsöffnung 145 wieder aus dem Elektronikbereich 143 heraus.

Die Figur 17 zeigt ein Trägerelement 170 auf dem das Filtermodul 1 montierbar ist. Das Trägerelement 170 weist des weiteren einen Griffbereich 171 zur leichteren Habdhabbarkeit beim Verschieben sowie einen Fixierungsbereich 172 zur Fixierung des Trägerelementes 170 in einer Endposition in der Belüftungsanordnung 142.

## Patentansprüche

1. Filtermodul zum Entfernen von Verschmutzungen aus einem Luftstrom, mit zumindest einer durchströmbaren Filterschicht (4) zum Anlagern der Verschmutzungen an der Filterschicht (4), wobei die Filterschicht (4) durch eine Vielzahl von länglichen Filterelementen (6) oder Filterelementabschnitten (6) gebildet ist, die voneinander beabstandet in der Ebene der Filterschicht (4) angeordnet sind, so daß zwischen den Filterelementen (6) oder den -elementabschnitten (6) Luftdurchtrittspalte (53) verbleiben, deren Spaltmaß (61) durch den Abstand zwischen benachbarten Filterelementen (6) oder -elementabschnitten (6) bestimmt ist, **dadurch gekennzeichnet, dass** in dem Filtermodul (1) zusätzlich zu den Luftdurchtrittspalten (53) ein Bypass-Kanal (50) zwischen zwei benachbarten länglichen Filterelementen (6) oder -elementabschnitten (6) vorgesehen ist, dessen lichte Weite (51) deutlich größer als das Spaltmaß der Luftdurchtrittsspalte zwischen den Filterelementen (6) oder - elementabschnitten (6) ist und der derart ausgebildet ist, einen restlichen Teil des Luftstromquerschnitts ungefiltert an allen Filterschichten (4) vorbeiströmen zu lassen, wobei die lichte Weite (51) des Bypass-Kanals (50) mindestens doppelt so groß wie die lichte Weite (51) der Luftdurchtrittspalte (53) zwischen den Filterlementen (6) oder -elementabschnitten (6) der Filterschicht (4) ist.

2. Filtermodul nach dem vorhergehenden Anspruch, wobei der Bypass-Kanal (50) von einer Ventileinrichtung verschließbar ist, die in Abhängigkeit eines sich an dem Filtermodul (1) einstellenden Staudrucks betätigbar ist, insbesondere bei Überschreiten eines vorbestimmten Druckwerts stromauf des Filtermoduls (1) und/oder bei Unterschreiten eines vorbestimmten Druckwerts stromab des Filtermoduls (1) öffnet.

3. Filtermodul nach Anspruch 1, wobei der Bypass-Kanal (50) frei von Ventileinrichtungen ausgebildet und/oder permanent geöffnet ist.

4. Filtermodul nach einem der vorhergehenden Ansprüche, wobei mehrere Filterschichten (4) hintereinander angeordnet sind, die jeweils von vorzugsweise stabförmigen und/oder aus einem porösen, durch ein Fluid wie Öl befeuchtetetem Filterelementen gebildet sind, wobei die Filterelemente (6) in hintereinander liegenden Filterschichten (4) quer zur Strömungsrichtung versetzt zueinander angeordnet sind, so dass der Luftstrom durch die Filterschichten (4) hindurch einen serpentinen- oder mäanderförmigen Weg zu nehmen hat.

5. Filtermodul nach einem der vorhergehenden Ansprüche, wobei die lichte Weite (51) des Bypass-Kanals (50) mehr als drei Mal, weiter vorzugsweise mehr als fünf Mal, so groß wie die lichte Weite (61) der Luftdurchtrittsspalte (53) zwischen den Filterelementen (6) der Filterschicht (4) ist.

6. Filtermodul nach einem der vorhergehenden Ansprüche, wobei die Filterschicht (4) zumindest einen rahmenlosen, offenen Umfangsabschnitt besitzt, an dem der Luftstrom frei an der offenen Umfangsseite der Filterschicht (4) vorbei strömt, wobei der genannte rahmenlose, offene Umfangsabschnitt der Filterschicht frei von Strömungsleitmitteln wie Begrenzungswänden und dergleichen ausgebildet ist.

7. Filtermodul nach einem der vorhergehenden Ansprüche, wobei die zumindest eine Filterschicht (4) durch frei auskragend angeordnete, vorzugsweise stabförmige Filterelemente (6) gebildet ist, die zumindest ein ungelagertes, freies Ende besitzen, wobei vorzugsweise die genannten Filterelemente (6) durch einen mittig angeordneten Filterhalter (5) gelagert sind, so dass die Filterelemente (6) zwei freie Enden haben, oder durch einen endseitig angeordneten Filterhalter (5) gelagert sind, so dass die Filterelemente (6) ein freies Ende haben.

8. Filtermodul nach einem der vorhergehenden Ansprüche, wobei die Filterschicht (4) durch eine Vielzahl sich parallel zueinander erstreckender Filterstäbe (13) gebildet ist und/oder die oder zumindest eine weitere Filterschicht (4) durch zumindest einen Filterstab (13) gebildet ist, der sich mäanderförmig oder spiralförmig erstreckt und nebeneinander liegende Stababschnitte besitzt.

9. Luftreiniger mit einem Filtermodul (1), das gemäß einem der vorhergehenden Ansprüche 1-8 ausgebildet ist, sowie einem das Filtermodul (1) umgebenden Montagerahmen (26).

10. Luftreiniger mit einem Filtermodul (1) sowie einem das Filtermodul (1) umgebenden Montagerahmen (26), wobei das Filtermodul (1) zumindest eine durchströmbare Filterschicht (4) zum Anlagern von Verschmutzungen an der Filterschicht (4) aufweist, wobei die Filterschicht (4) durch eine Vielzahl von länglichen Filterelementen (6) oder Filterelementabschnitten (6) gebildet ist, die voneinander beabstandet in der Ebene der Filterschicht (4) angeordnet sind, so daß zwischen den Filterelementen (6) oder den - elementabschnitten (6) Luftdurchtrittspalte (53) verbleiben, deren Spaltmaß (61) durch den Abstand zwischen benachbarten Filterelementen (6) oder - elementabschnitten (6) bestimmt ist, **dadurch gekennzeichnet, dass** zusätzlich zu den Luftdurchtrittspalten (53) ein Bypass-Kanal (50) zwischen einem länglichen Filterelement (6) und dem das Filtermodul (1) umgebenden Montagerahmen (26) vorgesehen ist, dessen lichte Weite (51) deutlich größer als das Spaltmaß der Luftdurchtrittsspalte zwischen den Filterelementen (6) oder -element-abschnitten (6) ist und der derart ausgebildet ist, einen restlichen Teil des Luftstromquerschnitts ungefiltert an allen Filterschichten (4) vorbeiströmen zu lassen, wobei die lichte Weite (51) des Bypass-Kanals (50) mindestens doppelt so groß wie die lichte Weite (51) der Luftdurchtrittspalte (53) zwischen den Filterlementen (6) der Filterschicht (4) ist.

11. Luftreiniger nach einem der vorhergehenden Ansprüche 9 oder 10, wobei der Montagerahmen (26) eine Aussparung (27) aufweist, in welche das Filtermodul (1) in Richtung des Luftflusses einschiebbar und vorzugsweise durch Pressitz gehalten ist, und/oder mit einer Montageanordnung, mit welcher das Filtermodul lösbar verbindbar ist, und/oder mit einem Gehäuse, durch welches ein Luftstrom von einer Eingangsöffnung durch das Filtermodul zu einer Ausgangsöffnung geleitet wird, wobei der Luftstrom durch das Gehäuse (147) auf dem Weg von der Eingangsöffnung zum Filtermodul und /oder vom Filtermodul zur Ausgangsöffnung umgelenkt wird, vorteilhafterweise um mehr als 45°, weiterhin vorteilhafterweise um ca. 90°.

12. Luftreiniger nach einem der vorhergehenden Ansprüche 9 bis 11, wobei der Luftreiniger als Luftreinigungsmodul ausgeführt ist, welches lösbar an einer Aufnahme eines Gerätegehäuses befestigbar ist, um zum Wechseln des Filtermoduls von der Aufnahme gelöst werden zu können, wobei vorteilhafterweise die Befestigung ohne die Verwendung von Werkzeug lösbar ist, wobei vorzugsweise die Befestigung durch ein elastisches Element erfolgt, insbesondere ein längenveränderliches elastisches Element, insbesondere durch eine Spiralfeder, wobei das elastische Element vorteilhafterweise an dem Gerätegehäuse befestigt ist und das Luftreinigungsmodul an die Aufnahme presst.

13. Luftreiniger nach einem der Ansprüche 9 bis 12, ferner mit einem Lüfter (2), wobei das Filtermodul (1) unmittelbar angrenzend an den Lüfter (2) in dessen Abluft- oder Ansaugluftstrom angeordnet ist.

14. Luftreiniger nach dem vorhergehenden Anspruch, wobei die Strömungsquerschnittsfläche des Bypass-Kanals (50) 10 % bis 30 %, vorzugsweise etwa 15 % bis 25 % der Fläche der Filterschicht (4) beträgt, mit der die Filterschicht (4) den Luftstrom (52) überdeckt.

15. Luftreiniger nach einem der Ansprüche 13-14, wobei die Summe aus der Querschnittsfläche des Bypass-Kanals (50) und der den Luftstrom überdeckenden Fläche der Filterschicht (4) der Querschnittsfläche des Luftstroms vor dem Filtermodul (1) entspricht und/oder der Bypass-Kanal (50) durch eine Aussparung der/jeder Filterschicht (4) gebildet ist.

16. Verwendung eines Luftreinigers nach einem der Ansprüche 9-15 zur Reinigung der Kühlluft eines Unterhaltungs-, Spiel- und/oder Wettautomaten, der ein Gerätegehäuse, eine Anzeigevorrichtung zur Anzeige von Spielinformationen sowie eine elektronische Steuerungsvorrichtung zur Steuerung der Anzeigevorrichtung aufweist, wobei der Luftreiniger im Inneren des Gerätegehäuses angeordnet ist.

17. Elektronisches Gerät mit einem Luftreiniger nach einem der Ansprüche 9 bis 15, insbesondere Unterhaltungs-, Spiel- und/oder Wettautomat, mit einem Gerätegehäuse, wobei der Luftreiniger an oder im Inneren des Gerätegehäuses angeordnet ist.

## Claims

1. Filter module for the removal of pollutants from an air flow, comprising at least one permeable filter layer (4) for the accumulation of the pollutants on the filter layer (4), wherein the filter layer (4) is formed by a plurality of elongate filter elements (6) or filter element sections (6), which are arranged spaced apart from one another in the plane of the filter layer (4), so that air passage gaps (53) remain between the filter elements (6), or filter element sections (6), the gap width (61) of which is determined by the distance between neighboring filter elements (6) or filter element sections (6), **characterized in that**, in addition to the air passage gaps (53), a bypass channel (50) is provided in the filter module (1) between two neighboring elongate filter elements (6), or filter element sections (6), the clearance (51) of which is significantly larger than the gap width of the air passage gaps between the filter elements (6), or filter element sections (6), and which is configured in such a way to allow a remaining part of the air flow cross-section to flow past all filter layers (4) in an unfiltered manner, wherein the clearance (51) of the bypass channel (50) is at least twice the clearance (51) of the air passage gaps (53) between filter elements (6), or filter element sections (6) of the filter layer (4).

2. Filter module according to the preceding claim, wherein the bypass channel (50) may be closed with a valve means that is operable as a function of a dynamic pressure that develops at the filter module (1) and that opens up, especially if a pre-defined pressure level is exceeded in an upstream position with regard to the filter module (1) and/or if a pre-defined pressure level is undercut at a downstream position with regard to the filter module (1).

3. Filter module according to claim 1, wherein the bypass channel (50) is formed free of valve systems and/or is permanently open.

4. Filter module according to one of the preceding claims, wherein multiple filter layers (4) are arranged one behind the other, which are each formed by preferably bar-shaped filter elements and/or by porous filter elements wetted with a fluid such as oil, wherein the filter elements (6) are arranged in filter layers (4) arranged one behind the other, offset transversally to the flow direction, so that the air flow has to flow through the filter layers (4) in a serpentine-shaped or meandering way.

5. Filter module according to one of the preceding claims, wherein the bypass channel (50) has a clearance (51) which is more than three times and, further preferably more than five times, bigger than the clearance (61) of the air passage gaps (53) between the filter elements (6) of the filter layer (4).

6. Filter module according to one of the preceding claims, wherein the filter layer (4) comprises at least one frameless, open circumferential section on which the air flow freely flows through the open circumferential side of the filter layer (4) wherein the mentioned frameless, open circumferential section of the filter layer is configured to be free of any flow guiding systems such as delimitation walls and similar systems.

7. Filter module according to one of the preceding claims, wherein the at least one filter layer (4) is formed by freely overhanging, preferably bar-shaped filter elements (6) which have at least one non-supported, free end wherein preferably the mentioned filter elements (6) are supported by a centrally-arranged filter support (5), so that the filter elements (6) have two free ends or that they are supported by an end-side filter support (5) so that the filter elements (6) have one free end.

8. Filter module according to one of the preceding claims, wherein the filter layer (4) is formed by a plurality of parallel filter bars (13) and/or the or at least another filter layer (4) is formed by at least one meandering or spiral-shaped filter bar (13), which has bar sections adjacent to each other.

9. Air cleaner comprising a filter module (1), which is configured in accordance with one of the preceding claims 1 to 8, as well as a mounting frame (26) surrounding the filter module (1).

10. Air cleaner comprising a filter module (1) as well as a mounting frame (26) surrounding the filter module (1), wherein the filter module (1) comprises at least one permeable filter layer (4) for accumulation of the pollutants on the filter layer (4), wherein the filter layer (4) is formed by a plurality of elongate filter elements (6) or filter element sections (6), which are arranged spaced apart from one another on the plane of the filter layer (4), so that air passage gaps (53) remain between the filter elements (6), or filter element sections (6), the gap width (61) of which is determined by the distance between neighboring filter elements (6) or filter element sections (6), **characterized in that**, in addition to the air passage gaps (53), a bypass channel (50) is provided between an elongate filter element (6) and the mounting frame (26) surrounding the filter module (1), the clearance (51) of which is significantly larger than the gap width of the air passage gaps between the filter elements (6), or filter element sections (6), and which is configured in such a way to allow a remaining part of the air flow cross-section to flow past all filter layers (4) in an unfiltered manner, wherein the clearance (51) of the bypass channel (50) is at least twice the clearance (51) of the air passage gaps (53) between filter elements (6) of the filter layer (4).

11. Air cleaner according to one of the preceding claims 9 or 10, wherein the mounting frame (26) comprises a recess (27), into which the filter module (1) may be inserted in the direction of the air flow and is preferably held by a press-fit, and/or with a mounting arrangement, with which the filter module is releasable connectable, and/or with a housing through which an air flow is led from an input orifice through the filter module up to an output orifice, wherein the air flow through the housing (147) is diverted on the way from the input orifice to the filter module and/or from the filter module to the output orifice, preferably by more than 45% or more preferably by approx. 90°.

12. Air cleaner according to one of the preceding claims 9 to 11, wherein the air cleaner is designed as an air cleaning module which may be detachably attached to a receptacle of a machine housing in order to be detachable from the receptacle for the replacement of the filter module, wherein preferably the fixation is detachable without the use of tools, wherein preferably the fixation is effected by a flexible element, in particular by a flexible element adjustable length, in particular by means of a spiral spring, wherein the flexible element is advantageously attached to the machine housing and presses the air cleaning module on to the receptacle.

13. Air cleaner according to one of claims 9 to 12, further comprising a fan (2), wherein the filter module (1) is arranged directly adjacent the fan (2) in the discharge and intake air flow thereof.

14. Air cleaner according to the preceding claim, wherein the flow cross-section surface of the bypass channel (50) is 10 % to 30 %, preferably about 15 to 25 % of the surface of the filter layer (4), with which the filter layer (4) covers the air flow (52).

15. Air cleaner according to one of claims 13-14, wherein the sum of the cross-sectional area of the bypass channel (50) and the surface of the filter layer (4) covering the air flow corresponds to the cross-sectional surface of the air flow in front of the filter module (1) and/or the bypass channel (50) is formed by a recess of the/each filter layer (4).

16. Use of an air cleaner according to one of the claims 9 to 15, to clean the cooling air of an entertainment, gambling and/or betting machine which comprises a machine housing, a display apparatus to display gambling information as well as an electronic control device to control the display apparatus, wherein the air cleaner is located inside the machine housing.

17. Electronic device with an air cleaner according to one of claims 9 to 15, in particular an entertainment, gambling and/or betting machine with a machine housing, wherein the air cleaner is arranged at or on the inside of the machine housing.

## Revendications

1. Module filtrant destiné à éliminer les saletés d'un flux d'air, doté au moins d'une couche filtrante (4) pouvant être traversée pour déposer les saletés sur la couche filtrante (4), ladite couche filtrante (4) étant constituée d'un grand nombre d'éléments filtrants (6) oblongs ou de sections d'éléments filtrants (6), qui sont disposés à une certaine distance les uns des autres au niveau de la couche filtrante (4) de telle sorte qu'il reste entre les éléments filtrants (6) ou les sections d'éléments filtrants (6) des fentes de passage d'air (53) dont l'écartement (61) est déterminé par la distance entre des éléments filtrants (6) ou des sections d'éléments filtrants (6) voisins, **caractérisé en ce qu'**en plus des fentes de passage d'air (53), un canal de dérivation (50) est prévu dans le module filtrant (1) entre deux éléments filtrants (6) oblongs ou sections d'éléments filtrants (6) voisins, dont le diamètre intérieur (51) est sensiblement supérieur à l'écartement des fentes de passage d'air entre les éléments filtrants (6) ou les sections d'éléments filtrants (6) et est conçu de sorte à laisser passer, sans être filtrée, une fraction résiduelle de la section transversale du flux d'air par toutes les couches filtrantes (4), le diamètre intérieur (51) du canal de dérivation (50) étant au moins deux fois supérieur au diamètre intérieur (51) de la fente de passage d'air (53) entre les éléments filtrants (6) ou les sections d'éléments filtrants (6) de la couche filtrante (4).

2. Module filtrant selon la revendication précédente, dans lequel le canal de dérivation (50) peut être verrouillé par un moyen de soupape, ledit moyen de soupape pouvant être actionné en fonction d'une pression dynamique s'instaurant sur le module filtrant (1) et s'ouvrant notamment en cas de dépassement par le haut d'une valeur de pression prédéterminée en amont du module filtrant (1) et/ou en cas de dépassement par le bas d'une valeur de pression prédéterminée en aval du module filtrant (1).

3. Module filtrant selon la revendication 1, le canal de dérivation (50) étant réalisé exempte de moyens de soupape et/ou étant ouvert en permanence.

4. Module filtrant selon l'une quelconque des revendications précédentes, plusieurs couches filtrantes (4) étant disposées les unes derrière les autres et sont constituées de préférence d'éléments filtrants en forme de bâtonnets et/ou poreux, humidifiés par un fluide, comme de l'huile, lesdits éléments filtrants (6) étant disposés en décalé dans des couches filtrantes (4) placées l'une derrière l'autre transversalement au sens d'écoulement de telle sorte que le flux d'air doit suivre un chemin sinueux et méandreux à travers les couches filtrantes (4).

5. Module filtrant selon l'une quelconque des revendications précédentes, le diamètre intérieur (51) du canal de dérivation (50) étant plus de trois fois supérieur, de préférence plus de cinq fois supérieur au diamètre intérieur (61) de la fente de passage d'air (53) entre les éléments filtrants (6) de la couche filtrante (4).

6. Module filtrant selon l'une quelconque des revendications précédentes, dans lequel la couche filtrante (4) possède au moins une section périphérique ouverte et sans cadre, par laquelle le flux d'air s'écoule librement sur le côté périphérique ouvert de la couche filtrante (4), ladite section périphérique ouverte et sans cadre de la couche filtrante étant réalisée sans aucun élément de guidage de flux comme des parois de délimitation et similaires.

7. Module filtrant selon l'une quelconque des revendications précédentes, l'au moins une couche filtrante (4) étant constituée d'éléments filtrants (6) de préférence en forme de bâtonnets (6), montés librement en porte-à-faux, qui possèdent au moins une extrémité libre, non supportée, lesdits éléments filtrants (6) étant de préférence supportés par un porte-filtre (5) disposé dans le centre, de telle sorte que les éléments filtrants (6) ont deux extrémités libres, ou sont supportés par un porte-filtre (5) disposé à l'extrémité, de telle sorte que les éléments filtrants (6) possèdent une extrémité libre.

8. Module filtrant selon l'une quelconque des revendications précédentes, la couche filtrante (4) étant constituée d'un grand nombre de bâtonnets filtrants (13) qui s'étendent parallèlement les uns aux autres et/ou en ce que la couche ou au moins une autre couche filtrante (4) étant constituée par au moins un bâtonnet filtrant (13) qui s'étend en forme de méandre ou de spirale et possède des sections de bâtonnet placées les unes à côté des autres.

9. Purificateur d'air doté d'un module filtrant (1), lequel est réalisé conformément à l'une quelconque des revendications précédentes 1 à 8, ainsi que d'un cadre de montage (26) entourant le module filtrant (1).

10. Purificateur d'air doté d'un module filtrant (1) ainsi que d'un cadre de montage (26) entourant le module filtrant (1), ledit module filtrant (1) comportant au moins une couche filtrante (4) pouvant être traversée pour le dépôt des saletés sur la couche filtrante (4), ladite couche filtrante (4) étant constituée d'un grand nombre d'éléments filtrants (6) oblongs ou de sections d'éléments filtrants (6) qui sont disposés à une certaine distance les uns des autres au niveau de la couche filtrante (4) de telle sorte qu'il reste entre les éléments filtrants (6) ou les sections d'éléments filtrants (6) des fentes de passage d'air (53) dont l'écartement (61) est déterminé par la distance entre des éléments filtrants (6) ou des sections d'éléments filtrants (6) voisins, **caractérisé en ce qu'**en plus des fentes de passage d'air (53), un canal de dérivation (50) est prévu entre un élément filtrant (6) oblong et le cadre de montage (26) entourant le module filtrant (1), le diamètre intérieur (51) duquel est sensiblement supérieur à l'écartement de la fente de passage d'air entre les éléments filtrants (6) ou les sections d'éléments (6) et conçu de sorte à laisser passer, sans être filtrée, une fraction résiduelle de la section transversale du flux d'air par toutes les couches filtrantes (4), le diamètre intérieur (51) du canal de dérivation (50) étant au moins deux fois supérieur au diamètre intérieur (51) de la fente de passage d'air (53) entre les éléments filtrants (6) de la couche filtrante (4).

11. Purificateur d'air selon l'une quelconque des revendications précédentes 9 ou 10, le cadre de montage (26) comportant un évidement (27) dans lequel le module filtrant (1) peut être inséré dans le sens du flux d'air et est maintenu de préférence par un ajustement serré, et/ou avec un agencement de montage auquel le module filtrant peut être relié de manière amovible, et/ou avec un boîtier à travers lequel un flux d'air est guidé d'un orifice d'admission à travers le module filtrant vers un orifice de sortie, le flux d'air étant dévié, sur son chemin de l'orifice d'admission et le module filtrant et/ou entre le module filtrant et l'orifice de sortie, de préférence de plus de 45°, également de préférence d'environ 90°, par le boîtier (147).

12. Purificateur d'air selon l'une quelconque des revendications précédentes 9 à 11, le purificateur d'air étant conçu comme un module de purification d'air, lequel peut être fixé de manière amovible sur un logement d'un boîtier d'appareil, afin de pouvoir être détaché du logement pour changer le module filtrant, la fixation pouvant avantageusement être détachée sans utiliser aucun outil, la fixation étant effectuée de préférence par un élément élastique, en particulier un élément élastique de longueur variable, en particulier par un ressort hélicoïdal, l'élément élastique étant avantageusement fixé sur le boîtier d'appareil et pressant le module de purification d'air contre le logement.

13. Purificateur d'air selon l'une quelconque des revendications 9 à 12, également doté d'un ventilateur (2), le module filtrant (1) étant placé directement adjacente au ventilateur (2), dans le flux d'air vicié ou aspiré de celui-ci.

14. Purificateur d'air selon la revendication précédente, dans lequel la surface de la section transversale d'écoulement du canal de dérivation (50) s'élève à entre 10 et 30 %, de préférence à environ entre 15 et 25 % de la surface de la couche filtrante (4) avec laquelle la couche filtrante (4) couvre le flux d'air (52).

15. Purificateur d'air selon l'une quelconque des revendications 13 à 14, dans lequel la somme de la surface de la section transversale du canal de dérivation (50) et de la surface de la couche filtrante (4) couvrant le flux d'air correspond à la surface de la section transversale du flux d'air avant le module filtrant (1) et/ou dans lequel le canal de dérivation (50) est formé par un évidement de la/chaque couche filtrante (4).

16. Utilisation d'un purificateur d'air selon l'une quelconque des revendications 9 à 15 pour le nettoyage de l'air de refroidissement d'une machine de divertissement, de jeu et/ou de pari, qui présente un boîtier d'appareil, un dispositif d'affichage pour afficher des informations de jeu ainsi qu'un dispositif de commande électronique destiné à la commande du dispositif d'affichage, le purificateur d'air étant placé à l'intérieur du boîtier d'appareil.

17. Appareil électronique doté d'un purificateur d'air selon l'une quelconque des revendications 9 à 15, en particulier une machine de divertissement, de jeu et/ou de pari, avec un boîtier d'appareil, le purificateur d'air étant placé sur ou à l'intérieur du boîtier d'appareil.
